# EUROPÄISCHE PATENTANMELDUNG

(11) **EP 1 052 594 A1**
(43) Veröffentlichungstag der Anmeldung: **15.11.2000**
(21) Anmeldenummer: 99810432.7
(22) Anmeldetag: 14.05.1999
(51) Int. Cl.: G06K 19/077

(54) **Transponder und Spritzgussteil sowie Verfahren zu ihrer Herstellung**

(71) Anmelder: SOKYMAT S.A., 1614 Granges (Veveyse) (CH)
(72) Erfinder: Miehling, Martin, 1614 Granges (Vevey) (CH)
(74) Vertreter: Wagner, Wolfgang, Dr. Phil., Dipl.-Phys.

(57) **Zusammenfassung**

Ein Transponder (1) umfasst einen elektrischen Schaltkreis (2) und eine denselben lückenlos umhüllende Kapselung (6) aus Schmelzkleber, der vorzugsweise aus Polyamiden besteht und mit dem der Schaltkreis (2) schonend bei Drücken und Temperaturen umhüllt wird, die unter den Drücken und Temperaturen liegen, wie sie beim konventionellen Spritzguss auftreten. Er kann in ein Spritzgussteil, z. B. eine Münze (18) integriert werden, indem er in eine Spritzgussform eingelegt wird, in der er durch Füsse (15) abgestützt ist und anschliessend im gewöhnlichen Spritzgussverfahren umspritzt wird, so dass er eine widerstandsfähigere Hülse (19) erhält.

## Beschreibung

### Technisches Gebiet

Die Erfindung betrifft einen Transponder, wie sie vor allem in Karten oder Marken zur Identifikation von Gegenständen verschiedener Art, aber auch von Personen oder Tieren eingesetzt werden.

### Stand der Technik

Aus der US-A-5 420 757 ist ein gattungsgemässer Transponder bekannt, bei welchem der elektrische Schaltkreis in Epoxidharz oder thermoplastischem Material gekapselt ist. Eine derartige Kapselung wird durch konventionellen Spritzguss hergestellt. Dieses Verfahren hat verschiedene Nachteile. Vor allem werden die Schaltkreise hohen Temperaturen und Drücken ausgesetzt, was oft zu Beschädigungen führt. Insbesondere der Backlack von Spulen erweicht bei hohen Temperaturen, so dass die Spulen zerfallen können. Auch Lötstellen können erweichen. Da wegen der hohen Drücke grosse Kräfte auf die Bauteile einwirken, müssen sie, vor allem wenn dieselben keine Anschlüsse aufweisen, an denen sie während des Spritzgiessens fixiert werden könnten, an aufwendigen Halterungen oder Trägern aus geeignetem Material fixiert werden, damit sie nicht während des Spritzgiessvorgangs in der Kavität verschoben werden, denn dies könnte zu einer unvollständigen Umhüllung und Beschädigungen bei späteren Verarbeitungsschritten führen. Andererseits durchdringen die Halterungen die Kapselung und müssen zudem durch Stanzen oder einen ähnlichen weiteren Arbeitsschritt durchtrennt werden. Die Herstellung einer lückenlosen Kapselung ist erschwert und verteuert.

### Darstellung der Erfindung

Der Erfindung liegt die Aufgabe zu Grunde, einen gattungsgemässen Transponder anzugeben, der eine ihn vollständig umhüllende Kapselung aufweist sowie ein einfaches Verfahren zu seiner Herstellung. Diese Aufgabe wird durch die Merkmale im Kennzeichen des Anspruchs 1 bzw. des Anspruchs 8 gelöst.

Der erfindungsgemässe Transponder wird von seiner Kapselung vollständig umüllt, so dass er gegen Beschädigung optimal geschützt ist und auch einer rauhen Umgebung ohne Bedenken ausgesetzt werden kann. Er kann leicht mit Folie, insbesondere Kunststoffolie laminiert werden. Das Herstellungsverfahren ist einfach und setzt die Schaltkreise nur verhältnismässig tiefen Drücken und Temperaturen aus, so dass keine Gefahr einer Beschädigung derselben besteht und sie auch nicht aufwendig fixiert zu werden brauchen, sondern in der Regel lediglich eingelegt werden. Ausserdem können Aluminiumformen verwendet werden, welche wesentlich billiger sind als die beim konventionellen Spritzgiessen eingesetzten Stahlformen. Die Formen müssen in der Regel nicht geheizt werden. Der geringe Druck erlaubt den Einsatz leichter und verhältnismässig billiger Spritzgussmaschinen.

Erfindungsgemässe Transponder können jedoch, da die Schaltkreise vollständig umhüllt sind, ohne weiteres den hohen Drücken und Temperaturen ausgesetzt werden, wie sie gewöhnlich beim Spritzgiessen auftreten. Die Erfindung umfasst daher auch Spritzgussteile, in die ein erfindungsgemässer Transponder, der in dafür besonders geeigneter Weise ausgebildet sein kann, integriert ist. Dabei kann es sich um Münzen, Gehäuse, Gebrauchsartikel, Paletten usw. handeln. Der Formgebung sind hier kaum Grenzen gesetzt. Die Herstellung solcher Spritzgussteile wird durch die Integration des erfindungsgemässen Transponders kaum erschwert, da er in die Kavität eingelegt und umspritzt werden kann, ohne dass er bei der Festlegung der Parameter besonders berücksichtigt zu werden bräuchte.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1a: einen Querschnitt durch eine Form während einer ersten Phase einer ersten Ausführungsform des erfindungsgemässen Verfahrens zur Herstellung eines erfindungsgemässen Transponders,
- Fig. 1b: eine Draufsicht auf die untere Hälfte der Form gemäss Fig. 1a,
- Fig. 1c: einen Querschnitt durch die Form während einer zweiten Phase der ersten Ausführungsform des erfindungsgemässen Verfahrens zur Herstellung eines erfindungsgemässen Transponders,
- Fig. 1d: eine Draufsicht auf die untere Hälfte der Form gemäss Fig. 1c,
- Fig. 1e: einen Querschnitt durch einen erfindungsgemässen Transponder, hergestellt gemäss der ersten Ausführungsform des erfindungsgemässen Verfahrens,
- Fig. 1f: eine Draufsicht auf den erfindungsgemässen Transponder gemäss Fig. 1e,
- Fig. 2a: einen Querschnitt durch eine Form während einer ersten Phase einer zweiten Ausführungsform des erfindungsgemässen Verfahrens zur Herstellung eines erfindungsgemässen Transponders,
- Fig. 2b: einen Querschnitt durch die Form während einer zweiten Phase der zweiten Ausführungsform des erfindungsgemässen Verfahrens zur Herstellung eines erfindungsgemässen Transponders,
- Fig. 3a: eine Draufsicht auf ein Zwischenprodukt einer dritten Ausführungsform des erfindungsgemässen Verfahrens zur Herstellung eines erfindungsgemässen Transponders,
- Fig. 3b: einen Querschnitt durch das Zwischenprodukt gemäss Fig. 3a,
- Fig. 3c: einen Querschnitt durch einen erfindungsgemässen Transponder, hergestellt gemäss der dritten Ausführungsform des erfindungsgemässen Verfahrens,
- Fig. 3d: eine Draufsicht auf den erfindungsgemässen Transponder gemäss Fig. 3c,
- Fig. 4a: einen Querschnitt durch eine Spritzgussform während einer Phase des erfindungsgemässen Verfahrens zur Herstellung eines erfindungsgemässen Spritzgusteils,
- Fig. 4b: einen Querschnitt durch ein erfindungsgemässes Spritzgussteil und
- Fig. 4c: eine Draufsicht auf das erfindungsgemässe Spritzgussteil gemäss Fig. 4b.

### Wege zur Ausführung der Erfindung

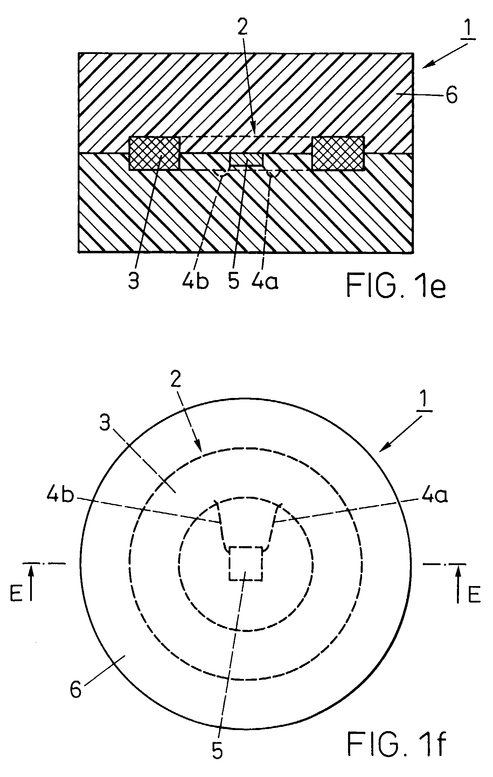

Ein erfindungsgemässer Transponder 1 (s. z. B. Fig. 1e,f) umfasst einen elektrischen Schaltkreis 2, der im Beispiel eine Spule 3 aus durch einen Backlack zusammengehaltenem Kupferdraht umfasst, mit Anschlüssen 4a,b, welche die Spule 3 mit einer ebenfalls zum Schaltkreis 2 gehörigen integrierten Schaltung 5 verbinden. Der Schaltkreis 2 ist in sich geschlossen und weist keine äusseren Anschlüsse auf. Mittels der Spule 3 kann er induktiv mit einem äusseren elektromagnetischen Wechselfeld wechselwirken und Energie aufnehmen sowie gespeicherte Daten aussenden und - bei geeigneter Ausbildung der integrierten Schaltung 5 - auch empfangen und speichern. Er ist vollständig von einer Kapselung 6 aus Schmelzkleber umschlossen. Der Schmelzkleber besteht vorzugsweise aus Polyamid. Er weist eine Schmelztemperatur auf, die höchstens 250°C, vorzugsweise zwischen 180°C und 220°C beträgt. Die Viskosität der Schmelze ist gering.

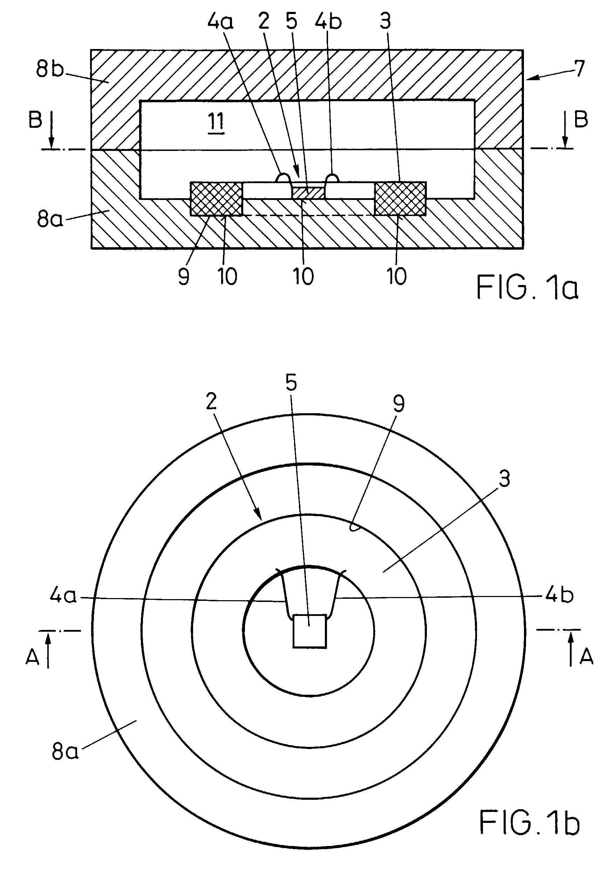

Gemäss einer ersten Ausführungsform des erfindungsgemässen Verfahrens zur Herstellung eines erfindungsgemässen Transponders wird (Fig. 1a,b) eine erste Form 7 bereitgestellt, die aus Aluminium bestehen kann. Sie umfasst eine untere Formhälfte 8a und eine obere Formhälfte 8b. Der Schaltkreis 2 wird in die untere Formhälfte 8a eingelegt, wobei die Spule 3 zur besseren Fixierung teilweise von einer Vertiefung 9 aufgenommen wird. Die integrierte Schaltung 5 liegt etwa im Zentrum der Spule 3 auf der unteren Formhälfte 8a auf und wird von den Anschlüssen 4a,b festgehalten. Der Schaltkreis 2 liegt somit mit einer Auflagefläche 10, die aus dem unteren Teil der Aussenfläche der Spule 3 und der Grundfläche der integrierten Schaltung 5 besteht, an einer entsprechenden Stützfläche der Form 7 an.

Nach dem Schliessen der ersten Form 7 durch Auflegen der zweiten Formhälfte 8b wird verflüssigter Schmelzkleber in die zwischen den Formhälften 8a,b gebildete Kavität 11 eingespritzt. Seine Temperatur liegt dabei etwas über der Schmelztemperatur, in der Regel bei ca. 200°C. Wegen der geringen Viskosität der Schmelze kann die Einspritzung mit niedrigem Druck von in der Regel ca. 20 bar erfolgen. Im allgemeinen liegen die Temperaturen je nach den Umständen zwischen 190°C und 230°C, höchstens bei 260°C, die Drücke zwischen 5 bar und 35 bis höchstens 40 bar. In der Kavität 11 liegen die Drücke meist tiefer, nämlich wenig über 0 bar, bis nach vollständiger Füllung auch dort der Einspritzdruck erreicht wird. Der in der Kavität 11 liegende Schaltkreis 2 wird teilweise, d. h. bis zur Mittelebene umhüllt, wobei die Auflagefläche 10 frei bleibt. Da dies ohne grosse thermische und mechanische Belastung geschieht, ist Beschädigung oder Verschiebung des Schaltkreises 2 durch die einströmende Schmelze nicht zu befürchten.

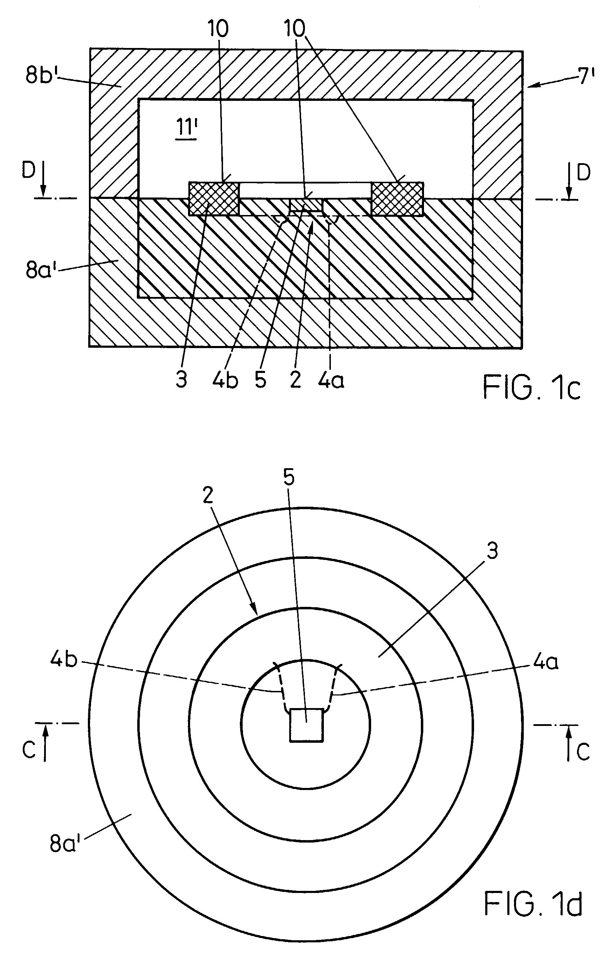

Nach dem Aushärten des Schmelzklebers wird der teilweise umhüllte Schaltkreis 2 aus der ersten Form 7 genommen, gewendet und in eine untere Formhälfte 8a' (Fig. 1c, d) einer höheren zweiten Form 7' eingelegt. Die Auflagefläche 10 weist dabei nach oben und liegt frei. Durch Auflegen einer oberen Formhälfte 8b' wird die Form 7' geschlossen und ihre Kavität 11' mit Schmelzkleber aufgefüllt. Nun ist auch die Auflagefläche 10 mit Schmelzkleber bedeckt und der Schaltkreis 2 lückenlos umhüllt. Die Kapselung 6 ist somit vollständig. Nach dem Aushärten des Schmelzklebers wird die Form 7' geöffnet und der scheibenförmigen Transponder 1 (Fig. 1e,f) entnommen. Der ebenfalls ungefähr scheibenförmige Schaltkreis 2 ist symmetrisch in der Kapselung 6 angeordnet.

Gemäss einer zweiten Ausführungsform des erfindungsgemässen Verfahrens zur Herstellung eines erfindungsgemässen Transponders wird nur eine Form 7 eingesetzt und der Schaltkreis 2 mittels vier Stiften 12a,b,c,d in der Mitte der Kavität derselben festgehalten, deren Endflächen wiederum Stützflächen bilden, an welchen die Spule 3 mit einer aus vier Teilflächen bestehenden Auflagefläche 10 anliegt. Die Stifte 12a,b,c,d bilden zwei Paare 12a,b und 12c,d, welche jeweils gegeneinander gerichtet sind und die Spule 3 zwischen sich festklemmen.

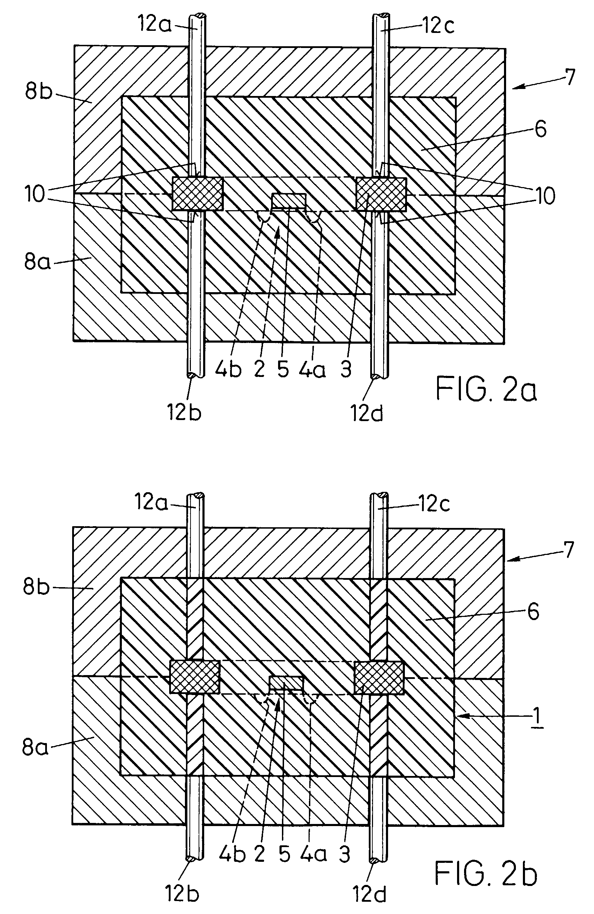

Nach dem Einspritzen des Schmelzklebers und Aushärten desselben (Fig. 2a) werden die Stifte 12a,b,c,d jeweils bis zur Wand der Kavität zurückgezogen. Dann wird nachgespritzt und die durch den Rückzug der Stifte 12a,b,c,d entstandenen Hohlräume aufgefüllt (Fig. 2b). Damit ist die Kapselung 6 wiederum vollständig und der Schaltkreis 2 lückenlos von Schmelzkleber umhüllt. Nach dem Aushärten des nachgespritzten Schmelzklebers wird die Form 7 geöffnet und der Transponder 1 herausgenommen.

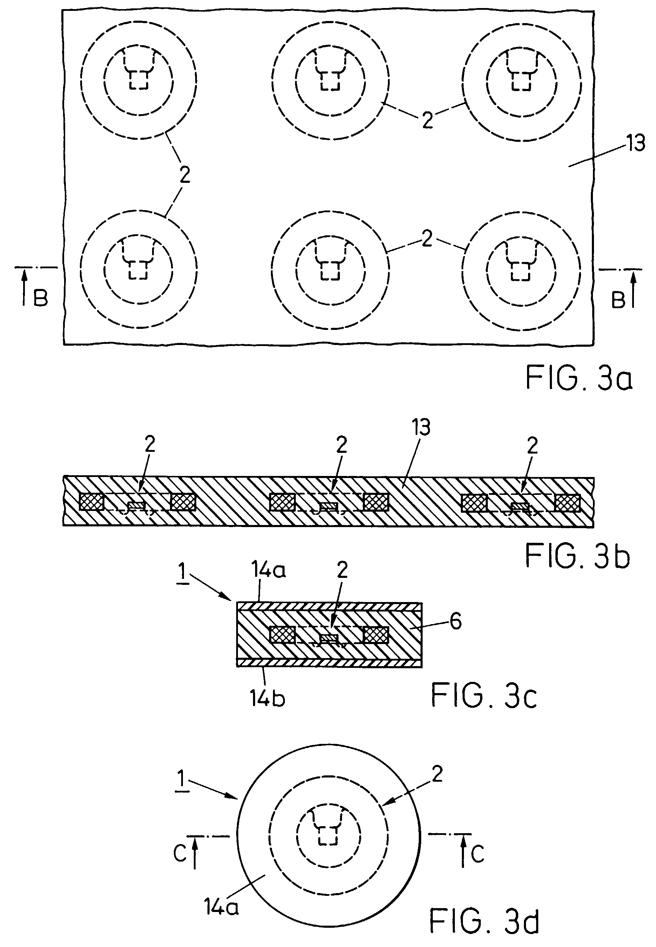

Gemäss einer dritten Ausführungsform des erfindungsgemässen Verfahrens zur Herstellung eines erfindungsgemässen Transponders werden mehrere Schaltkreise gleichzeitig umhüllt, so dass sie vorläufig durch die Umhüllung zusammengehalten werden. Die Vorgehensweise ist dabei prinzipiell die gleiche wie bei der ersten oder bei der zweiten Ausführungsform, doch ist die Form wesentlich grösser und ihre Kavität flach quaderförmig, so dass sich eine Vielzahl von Schaltkreisen in einem regelmässigen Raster in derselben anordnen lässt. Das Ergebnis des Spritzgussschrittes ist (Fig. 3a,b) eine zweidimensionale Anordnung von in Schmelzkleber eingebetteten Schaltkreisen 2, welche eine Platte 13 bildet. Die Schaltkreise 2 sind vom Schmelzkleber vollständig umhüllt und voneinander beabstandet.

Die Platte 13 kann dann ein- oder beidseitig mit einer Folie aus Kunststoff, vorzugsweise PVC heiss- oder kaltlaminiert werden. Anschliessend wird sie mittels eines Stanzwerkzeugs in einzelne, jeweils einen von einer Kapselung 6 vollständig umhüllten Schaltkreis 2 umfassende Transponder 1 zerlegt. Der Transponder 1 (Fig. 3c,d) ist im wesentlichen gleich aufgebaut wie die gemäss der ersten oder zweiten Ausführungsform des erfindungsgemässen Verfahrens hergestellten, doch weist er, wenn die Platte 13 beidseitig laminiert wurde, Deckschichten 14a,b auf, die vorzugsweise aus PVC bestehen, aber auch aus ABS, Polycarbonat, Polyester oder einem anderen geeigneten Material bestehen können. Die Platte 13 kann so präpariert werden, dass aus ihr unmittelbar eine Kredit- oder andere Karte oder eine Münze o. dgl. ausgestanzt werden kann, welche dann den Transponder 1 enthält.

Es ist auch möglich, mehrere Schaltkreise derart gemeinsam zu umhüllen, dass sie eine durch die Umhüllung zusammenhängende Zeile oder andere Anordnung von Transpondern bilden, die durch Verbindungsabschnitte, welche in einem späteren Arbeitsgang z. B. mechanisch durchtrennt werden, zusammengehalten wird.

Da die Schaltkreise durch die lückenlose Kapselung gegen hohe Drücke und Temperaturen geschützt sind, können erfindungsgemässe Transponder im Gegensatz zu ungekapselten Schaltkreisen problemlos in Spritzgussteile integriert werden, indem sie vor dem Einspritzen der Spritzgussmasse beim konventionellen Spritzgussverfahren in der Kavität der Spritzgussform angeordnet werden.

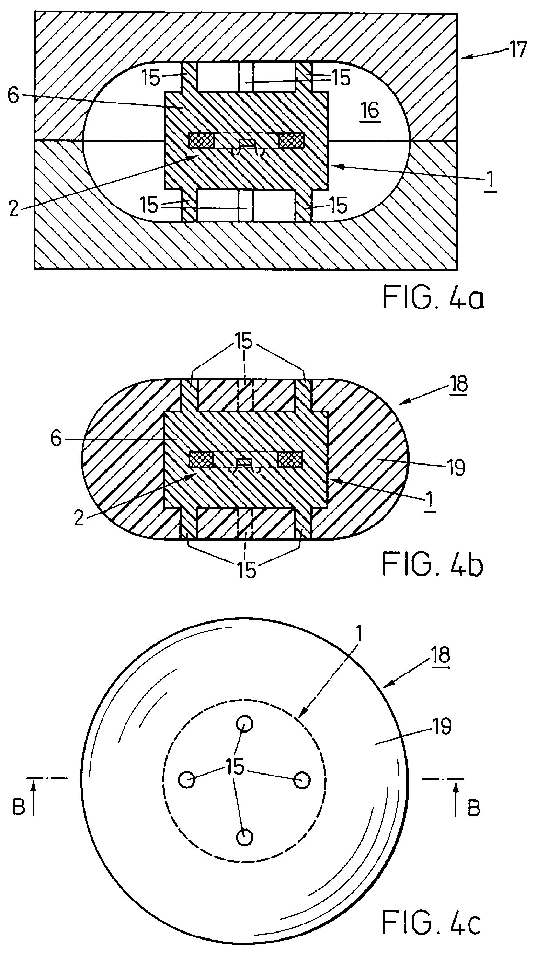

Sie können zu diesem Zweck speziell ausgebildet und mit Abstützorganen versehen sein. Diese können (Fig. 4a-c) als beidseits von der Kapselung abstehende Füsse 15 des Transponders 1 ausgebildet sein, welche durch entsprechende Ausbildung der bei der Herstellung desselben verwendeten Form oder z. B. durch Rückzug von Stiften, wie sie bei der zweiten Ausführungsform des erfindungsgemässen Verfahrens eingesetzt werden, hinter die Wand der Kavität beim Nachspritzen hergestellt werden. Jedenfalls stützen sie bei der erfindungsgemässen Herstellung eines erfindungsgemässen Spritzgussteils den Transponder 1 (Fig. 4a) in einer Kavität 16 einer aus gehärtetem Stahl bestehenden Spritzgussform 17 derart ab, dass er zuverlässig fixiert ist und beim Einspritzen der Spritzgussmasse nicht verschoben werden kann, obwohl dabei die Temperaturen um ca. 50°C höher liegen als bei der Herstellung der Kapselung 6 des Transponders 1 und die Drücke bei einigen hundert bar.

Es ist auch möglich, als Abstützorgan einen den Transponder z. B. ringförmig umgebenden Träger aus Kunststoff oder Metall vorzusehen, der mit der Kapselung vergossen ist und dessen äusserer Bereich dann zur Fixierung des Transponders zwischen den Hälften der Spritzgussform geklemmt wird.

Im fertigen erfindungsgemässen Spritzgussteil, im Beispiel einer Münze 18 oder einem Jeton, ist der Transponder 1 von einer im Spritzguss aufgebrachten Hülse 19 fast vollständig umgeben. Da sie aus Spritzgussmaterial besteht, das viskoser ist und höheren Schmelzpunkt aufweist als der Schmelzkleber, der die Kapselung 6 des Transponders 1 bildet, ist die Hülse 19 widerstandsfähiger und härter als diese und die Münze 18 entsprechend robust und beständig.

Der Transponder 1 kann in analoger Weise auch in komplexere Spritzgussteile integriert werden, z. B. in Gefässe oder Behälter, Gehäuse, Paletten, Fahrzeugteile und Gebrauchsartikel aller Art.

### Bezugszeichenliste

- 1: Transponder
- 2: Schaltkreis
- 3: Spule
- 4a,b: Anschlüsse
- 5: integrierte Schaltung
- 6: Kapselung
- 7, 7': Form
- 8a, 8a': untere Formhälfte
- 8b, 8b': obere Formhälfte
- 9: Vertiefung
- 10: Auflagefläche
- 11, 11': Kavität
- 12a,b,c,d: Stifte
- 13: Platte
- 14a,b: Deckschicht
- 15: Füsse
- 16: Kavität
- 17: Spritzgussform
- 18: Münze
- 19: Hülse

## Patentansprüche

1. Transponder (1) mit einem elektrischen Schaltkreis (2), welcher mindestens ein zur Wechselwirkung mit einem elektromagnetischen Feld geeignetes Bauteil enthält und einer Kapselung (6), **dadurch gekennzeichnet, dass** die Kapselung (6) aus Schmelzkleber besteht und den Schaltkreis (2) vollständig umhüllt.

2. Transponder nach Anspruch 1, **dadurch gekennzeichnet, dass** der Schmelzkleber im wesentlichen aus Polyamid besteht.

3. Transponder nach Anspruch 1 oder 2, **dadurch gekennzeichnet, dass** mindestens ein Teil der Oberfläche der Kapselung (6) von einer Deckschicht (14a,b) aus auflaminierter Folie bedeckt ist.

4. Transponder nach Anspruch 3, **dadurch gekennzeichnet, dass** die Folie aus Kunststoff, insbesondere aus PVC besteht.

5. Transponder nach einem der Ansprüche 1 bis 4, **dadurch gekennzeichnet, dass** der Schaltkreis (2) eine Spule (3) umfasst.

6. Transponder nach Anspruch 5, **dadurch gekennzeichnet, dass** der Schaltkreis (2) eine mit der Spule (3) elektrisch leitend verbundene integrierte Schaltung (5) umfasst.

7. Transponder nach einem der Ansprüche 1 bis 6, **dadurch gekennzeichnet, dass** die Kapselung (6) mindestens ein von ihrer Oberfläche abstehendes Abstützorgan umfasst.

8. Verfahren zur Herstellung eines Transponders (1) nach einem der Ansprüche 1 bis 7, **dadurch gekennzeichnet, dass**
- mindestens ein Schaltkreis (2) in eine Kavität (11) einer Form (7) eingelegt wird, so dass er mit einer Auflagefläche (10) an einer Stützfläche in der Kavität (11) anliegt,
- in die Kavität (11) flüssiger Schmelzkleber eingebracht und der mindestens eine Schaltkreis (2) teilweise umhüllt wird,
- nach Aushärten des Schmelzklebers die Auflagefläche (10) freigelegt und zur vollständigen Umhüllung des mindestens einen Schaltkreises (2) mit Schmelzkleber bedeckt wird.

9. Verfahren nach Anspruch 8, **dadurch gekennzeichnet, dass** der teilweise umhüllte mindestens eine Schaltkreis (2) in eine grössere Kavität (11') derart eingelegt wird, dass seine Auflagefläche (10) freiliegt und die grössere Kavität (11') mit Schmelzkleber gefüllt wird.

10. Verfahren nach Anspruch 8, **dadurch gekennzeichnet, dass** die Stützfläche durch mehrere Stifte (12a,b,c,d) gebildet wird, die nach der teilweisen Umhüllung des mindestens einen Schaltkreises (2) von der Auflagefläche (10) zurückgezogen werden, worauf die Kavität (11) wiederum mit Schmelzkleber aufgefüllt wird.

11. Verfahren nach einem der Ansprüche 8 bis 10, **dadurch gekennzeichnet, dass** mehrere Schaltkreise (2) derart gemeinsam umhüllt werden, dass sie durch die Umhüllung miteinander zusammenhängen.

12. Verfahren nach Anspruch 11, **dadurch gekennzeichnet, dass** die gemeinsame Umhüllung eine Platte (13) bildet, in welcher die Schaltkreise (2) gemäss einem bestimmten Raster angeordnet im Schmelzkleber eingebettet sind und anschliessend jeweils mindestens einen Schaltkreis (2) umfassende Transponder (1) aus der Platte (13) herausgestanzt werden.

13. Verfahren nach Anspruch 12, **dadurch gekennzeichnet, dass** die Platte (13) vor dem Herausstanzen der Transponder (1) einseitig oder beidseitig durch Laminieren mit einer Folie mit einer Deckschicht (14a,b) versehen wird.

14. Verfahren nach einem der Ansprüche 8 bis 13, **dadurch gekennzeichnet, dass** der flüssige Schmelzkleber mit einer Temperatur von höchstens 260°C, vorzugsweise höchstens 230°C und unter einem Druck von höchstens 40 bar, vorzugsweise höchstens 35 bar in die Kavität (11, 11') eingebracht wird.

15. Spritzgussteil mit einem in dasselbe integrierten Transponder (1) nach einem der Ansprüche 1 bis 7.

16. Verfahren zur Herstellung eines Spritzgussteils nach Anspruch 15, **dadurch gekennzeichnet, dass** der Transponder (1) in die Kavität (16) einer Spritzgussform (17) eingelegt wird, derart, dass er durch seine Abstützorgane in derselben fixiert ist und anschliessend Spritzgussmasse in die Kavität (16) eingespritzt wird.
